# EUROPEAN PATENT SPECIFICATION

(11) **EP 4 559 783 B1**
(45) Date of publication and mention of the grant of the patent: **14.10.2026**
(21) Application number: 23211621.0
(22) Date of filing: 22.11.2023
(51) Int. Cl.: B62D 5/04, B62D 6/00

(54) **METHOD TO CONTROL SAFE LEVELS OF ASSISTANCE TORQUE IN A STEERING SYSTEM WITH CLOSED LOOP CONTROL**
VERFAHREN ZUR STEUERUNG SICHERER NIVEAUS EINES HILFSDREHMOMENTS IN EINEM LENKSYSTEM MIT GESCHLOSSENER REGELKREISSTEUERUNG
PROCÉDÉ DE COMMANDE DE NIVEAUX SÛRS DE COUPLE D'ASSISTANCE DANS UN SYSTÈME DE DIRECTION À COMMANDE EN BOUCLE FERMÉE

(43) Date of publication of application: 28.05.2025
(73) Proprietor: Volvo Car Corporation, 405 31 Göteborg (SE)
(72) Inventor: Dahlgren, David, 41450 Göteborg (SE); Chugh, Tushar, 43645 Göteborg (SE); Hansson, Anders, 42341 Torslanda (SE)
(74) Representative: Nederlandsch Octrooibureau

(56) References cited:
- US-A1- 2016 264 173
- US-A1- 2020 346 688

## Description

### TECHNICAL FIELD

The present disclosure relates to methods of controlling motor torque requests in a vehicle, and a safety limiter or other system configured to perform the methods.

### BACKGROUND OF THE INVENTION

Systems like airbags, anti-lock brakes, and steering systems require an Automotive Safety Integrity Level D (ASIL-D) - the highest rigor applied to safety assurance - because the risks associated with their failure are the highest. A steering system commonly includes many functions, for example, basic assistance, active damping, active return, software end-stop, Advanced Driver Assistance System (ADAS), and Highly Automated Driving (HAD). To achieve safe operations of the steering system a number of safety mechanisms are typically implemented in order to meet the requirements of the IS26262 safety integrity classification, ASIL-D.

In traditional steering systems, each function element generates a motor torque request. These motor torque requests are then summed up and requested by the steering motor. This traditional approach is referred as open-loop control. In this traditional open-loop control, a safety limiter is applied after each function component before summation in order to meet the requirements of the ASIL-D implementation.

Another type of steering control is where the summed-up motor torque request is further sent to a controller. The reference can be defined as hand wheel torque or steering wheel angle. The controller then generates the motor torque request, which is requested by the steering motor. This alternative approach is referred to as closed-loop control.

Applying the traditional way of limiting each function in a closed-loop control would require an ASIL-D implementation of the controller.

Document US2016/264173A1 shows a prior art system with the features of the preamble of claim 1.

### SUMMARY OF THE INVENTION

A first aspect of the invention provides a method of controlling motor torque in a vehicle, the method comprising: receiving torque requests; determining a first upper torque threshold and a first lower torque threshold based on vehicle sensor information, the first upper torque threshold and the first lower torque threshold indicative of a range of allowable torque; determining a second upper torque threshold and a second lower torque threshold, wherein the second upper torque threshold is higher than the first upper torque threshold and the second lower torque threshold is lower than the first lower torque threshold. The second upper torque threshold and the second lower torque threshold set upper and lower limits which the motor torque cannot exceed. If consecutive torque requests are received that are between the first upper torque threshold and the second upper torque threshold or between the first lower torque threshold and the second lower torque threshold, the method includes summing up over time the consecutive torque requests between the first upper torque threshold and the second upper torque threshold or between the first lower torque threshold and the second lower torque threshold to find a summed-up torque value; and if the summed-up torque value exceeds a summed-up torque limit, adjusting the second upper torque threshold and/or the second lower torque threshold.

The first upper torque threshold and the first lower torque threshold indicative of the range of allowable torque can be, for example, the range of torque in which the vehicle is always controllable. Preferably, torque requests are between the first upper torque threshold and the first lower torque threshold, at a range in which the vehicle is controllable. However, consecutive torque requests exceeding the first upper torque threshold and the first lower torque threshold (but within the second upper threshold and the second lower threshold) can be allowed for short periods of time without causing a safety risk for the user (e.g., driver and/or passengers) of a vehicle. If the torque requests are between the first upper torque threshold and the second upper torque threshold or between the first lower torque threshold and the second lower torque threshold for too long, it could indicate that one or more of the function elements or electric components of the steering systems is malfunctioning. Thus, by summing consecutive torque requests within these ranges and comparing to a summed-up torque limit, the system is able to detect possible malfunctions and adjust the second upper torque threshold and/or the second lower torque threshold to reduce the risks associated with operating a vehicle in a range between the first upper torque threshold and the second upper torque threshold or between the first lower torque threshold and the second lower torque threshold for too long. Consequently, an allowed torque interval defined by the second upper and lower torque thresholds is reduced, and any further torque requests will not be allowed to exceed this newly reduced interval to lessen or eliminate any risks associated with operating in a larger torque interval when there may be a malfunction or other issue with one or more of the components in the steering system. The method is therefore able to set and dynamically adjust torque thresholds as needed (both the always allowable torque and absolute limits), thereby ensuring that torque requests are maintained within safe ranges and alerting to any possible malfunctions of function elements or components by monitoring and summing consecutive torque requests within specific ranges and comparing with a summed-up torque limit to limit the allowable intervals if needed (e.g., if consecutive torque requests over time sum up to a value which exceeds a summed-up torque limit). Thus, the method provides an effective way of ensuring that the requirements of the ASIL-D classification are met while accommodating a variety of vehicle operating conditions without compromising on steering functionality and performance.

According to an embodiment, the step of adjusting the second upper torque threshold and/or the second lower torque threshold if the summed-up torque value exceeds a summed-up torque limit comprises lowering the second upper torque threshold and/or raising the second lower torque threshold to narrow the upper and/or lower limits which the motor torque cannot exceed. Optionally, the step of adjusting the second upper torque threshold and/or the second lower torque threshold if the summed-up torque value exceeds a summed-up torque limit comprises lowering the second upper torque threshold to be the same as the first upper torque threshold and/or raising the second lower torque threshold to be the same as the first lower torque threshold. Adjusting the second upper torque threshold (e.g., to the first upper torque threshold) and/or adjusting the second lower torque threshold (e.g., to the first lower torque threshold) reduces the allowable torque range, thereby lowering the risk of encountering unsafe levels of torque when operating the vehicle and helping to ensure that torque requests by the steering motor are within a safe range of values even in the event of a possible malfunction of a system or component.

According to an embodiment, if the summed-up torque value is equal to or below the summed-up torque limit, the second upper torque threshold and the second lower torque threshold are maintained. By maintaining the second torque thresholds when the summed-up torque value is equal to or below the summed-up torque limit, the system allows for torque requests which may exceed the range of torque in which a vehicle is always controllable if only for short periods of time. This allows for larger torque requests which are sometimes necessary but only for periods of time in which it is safe to do so, for example, a torque request related to haptic warning when ADAS needs to quickly reduce speed due to another vehicle being to close to the vehicle in which the method is performed.

According to an embodiment, if a torque request is between the first upper torque threshold and the first lower torque threshold, the method further includes determining whether the second upper torque threshold and/or lower torque threshold have been previously adjusted; if the second upper torque threshold and/or lower torque threshold have been previously adjusted, identifying a number of times the second upper torque threshold and/or lower torque threshold have been previously adjusted. If the number of times the second upper torque threshold and/or lower torque threshold have been previously adjusted is equal to or lower than a count threshold, restoring the second upper torque threshold and/or lower torque threshold to the second upper and/or lower torque thresholds before the adjusting. A single error event can be caused by any of the multiple components or function elements of the steering system producing excessive torque request for a period of time. If this is not be repeated again (or not repeated more than the count threshold), the larger interval of second upper and lower torque thresholds can be restored safely for more flexible vehicle operations when there is no indication of a larger malfunction or ongoing fault state causing additional safety concerns. Thus, if the number of times the second upper torque threshold and lower torque threshold have been previously adjusted is equal to or lower than a count threshold, it can be presumed that the system can operate safely again with a larger interval of second upper and lower torque thresholds, allowing torque requests again to exceed the first upper and lower torque thresholds for short time periods without causing a risk.. The count threshold could be statically set, or could be adjusted in some systems. For example, the count threshold could be 1-10 times, preferably 5 times.

According to an embodiment, if the number of times the second upper torque threshold and/or second lower torque threshold have been previously adjusted is greater than the count threshold, transmitting a warning signal. By transmitting a warning signal, the user knows that the vehicle should be checked (e.g., by an appropriate professional) to ensure that all function elements and components are correctly working, and if any one or more components are malfunctioning, the malfunctioning components can be repaired or replaced. Thus, the exceeding of the count threshold can give a user an early indication that the vehicle should be inspected to ensure safe driving before allowing for a wider interval of torque requests again.

According to an embodiment, determining the second upper torque threshold and the second lower torque threshold comprises adding an offset value to the first upper torque threshold and to the first lower torque threshold, respectively. Such an offset can be a static number, a percentage or even a function (e.g., look up table) of vehicle speed. For example, an offset could be 20-100% of the value between the first upper and lower torque thresholds, preferably 80%. By adding an offset value, the second thresholds are set outside the first ("always controllable") torque thresholds but still within a range where operation is safe as long as the higher torque request levels are not maintained for too long, thereby allowing for some higher or lower torque requests as needed for flexible vehicle operations.

According to an embodiment, the vehicle sensor information used for determining the first upper torque threshold and the first lower torque threshold comprises at least one of a vehicle velocity, a rack position, a rack velocity and a torsion bar torque. Any one or more of these can be used to determine the first upper and lower torque thresholds defining the interval of torque which is allowable for the vehicle to continuously operate in a controllable manner. The sensor information can be collected by one or more sensors associated with the vehicle and/or vehicle systems or components and communicated, for example, to a safety limiter or other controller or system for use in determining the first upper torque threshold and the first lower torque threshold.

According to an embodiment, determining the first upper torque threshold and the first lower torque threshold based on vehicle sensor information comprises detecting current steering function elements in operation; determining thresholds for each of the function elements in operation; and arbitrating between the thresholds based on which motor torque limits take precedence. Optionally, the steering function elements comprise one or more of: driver limiter, ADAS limiter, and end stop limiter.

In a steering system, function elements such as ADAS and end-stop can be always active. End-stop limits correspond to limits to the torque request based on the steering wheel and vehicle velocity. Specifically, end stop limits allow the motor to apply torque against the user (driver) to maintain a certain max position. This is only allowed at high wheel angles close to the desired end-stop. The effect of the end stop function is that the assisting torque is ramped down as the user approaches the desired end stop. When the rack position exceeds the desired end stop or a position close (that is, vehicle wheel is turned over a limit), the motor applies a torque against the user. Depending on the driving mode of the vehicle, some function elements will take precedence over others or may influence other functions. The torque limits of each function element may depend on different sensor information, vehicle configuration, driving mode and/or conditions, etc.

According to an embodiment, the method is performed in a closed loop steering system. As explained in the background, a closed loop system is a type of steering control is where the summed-up motor torque reference is further sent to a controller, and then the controller generates the motor torque request, which is requested by the steering motor. The reference can be, for example, handwheel torque on steering wheel or steering wheel angle, depending on type of controller. The methods herein described allow for a simple but effective and safe control of the torque in a closed loop steering system without requiring separate safety limiters for each function element, component or system. Instead the methods are able to set and dynamically adjust torque thresholds as needed (both the generally allowable torque and absolute limits), thereby ensuring the torque requests are maintained within safe ranges and alerting to any possible malfunctions by monitoring and summing consecutive torque requests within specific ranges and comparing with a summed-up torque limit to limit the allowable intervals if needed (e.g., if consecutive torque requests over time sum up to a value which exceeds a summed-up torque limit).

According to a second aspect, a safety limiter is provided. Such a safety limiter is configured to perform the methods herein described. A safety limiter is a safety mechanism that can mitigate one or more safety hazards, particularly aiming to mitigate any hazardous torque requests in the steering system.

A third aspect of the invention provides a closed-loop steering system comprising: a low level controller configured to provide torque requests; a safety limiter configured to receive the torque requests and perform the methods herein described; and a motor configured to receive torque requests from the safety limiter. Such a system is able to determine and dynamically adjust thresholds for torque requests without requiring separate controllers and safety limiters for each function element or system, thus providing a safe and controllable system with fewer necessary components or systems for control and safety.

A fourth aspect of the invention provides a vehicle comprising the closed-loop steering system described. Optionally, the vehicle further comprises one or more of: a torsion bar torque sensor, a steering angle sensor, a pinion angle sensor, and a vehicle velocity sensor configured to send information to the closed-loop steering system. Such a vehicle is able to meet safety standards (with a single safety mechanism) while providing dynamic and safe torque limitation for a large variety of vehicle operating conditions and while maintaining high levels of steering functionality and performance.

The person skilled in the art will understand that the features described above may be combined in any way deemed useful. Moreover, modifications and variations described in respect of the system may likewise be applied to a method.

### BRIEF DESCRIPTION OF THE DRAWINGS

In the following, aspects of the invention will be elucidated by means of examples, with reference to the drawings.
FIG. 1A illustrates an schematic diagram of an steering system.
FIG. 1B illustrates an schematic diagram of a road vehicle comprising the steering system of FIG. 1A.
FIG. 2 illustrates a schematic diagram of a method of controlling motor torque in a vehicle. and
FIG. 3 illustrates a graph of torque requests over time.
FIG. 4 illustrates a schematic diagram of a method of determining a first upper torque threshold and a first lower torque threshold.
FIG. 5 illustrates a graph of upper and lower thresholds for a driver limiter.
FIG. 6 illustrates a graph of upper and lower thresholds for an ADAS limiter.
FIG. 7 illustrates a graph of upper and lower thresholds for an end stop limiter.

### DESCRIPTION

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

The term "vehicle" as used herein refers to a thing used for transporting people or goods. Automobiles, cars, trucks, or buses etc. are examples of vehicles. The term "electric vehicle (EV)" as used herein refers to a vehicle , powered by an electric motor that draws current from an on-vehicle energy storage device, such as a battery, which is rechargeable from an off-vehicle source, such as residential or public electric service or an on-vehicle fuel powered generator. The EV may be two or more wheeled vehicles manufactured for use primarily on public streets, roads. The EV may be referred to as an electric car, an electric automobile, an electric road vehicle (ERV), a plug-in vehicle 25 (PV), a plug-in vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

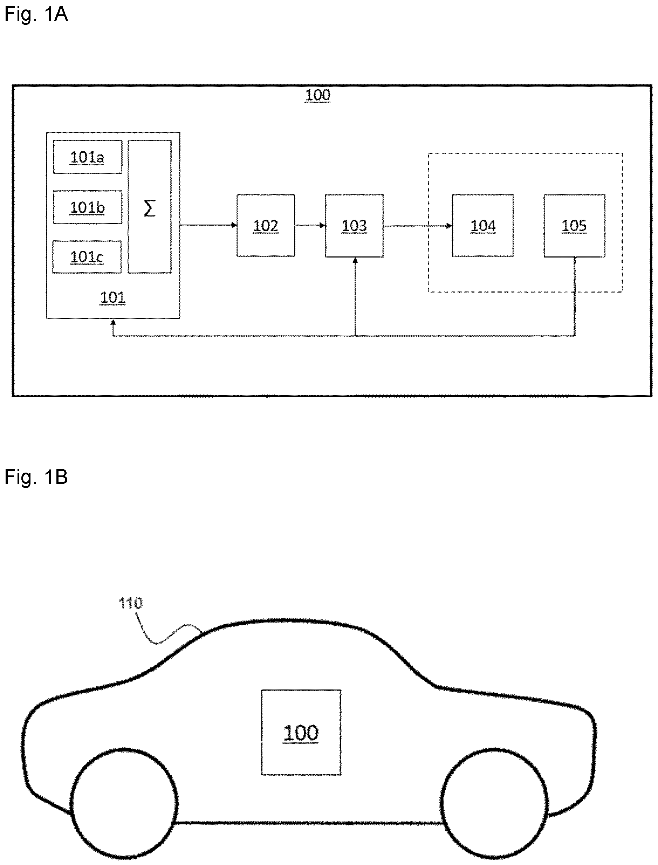

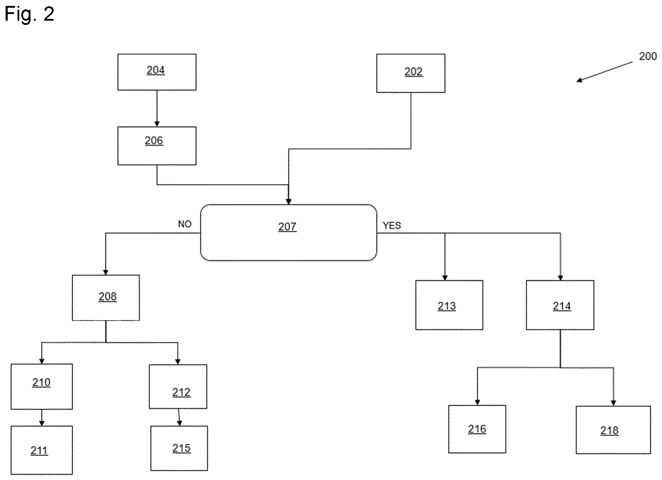

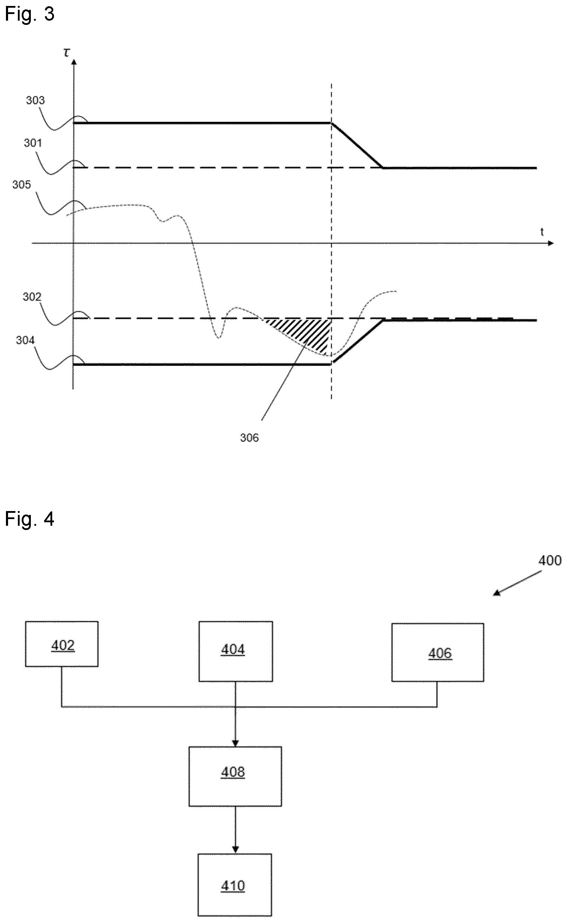

FIG. 1A illustrates an schematic diagram of an steering system 100. FIG. 1B illustrates a schematic diagram of a vehicle 110 comprising steering system 100, FIG. 2 illustrates a schematic diagram of a method of controlling motor torque in a vehicle, and FIG. 3 illustrates a graph of torque requests over time. The steering system 100 comprises steering reference module 101, controller 102, safety limiter 103, motor 104 and sensor module 105.

The steering reference module 101 comprises a plurality of function elements 101a-101c and a summing element Σ, each related to a certain function of the steering system. For example, function element 101a may relate to manual driving, function element 101b may relate to ADAS (Advanced Driver Assistance System), and function element 101c may relate to end-stops. Although manual driving, ADAS and end stops are shown, other function elements related to the steering system can be used in addition to or alternatively to those shown and described. The steering reference module 101 is configured to receive vehicle and/or sensor signals (vehicle speed, ADAS/HAD position request, ADAS mode, HAD mode)for each function element 101a-101c, and sum up function element requests.

The sensor module 105 comprises one or more sensors, which can be used to provide information to the steering reference module 101 and the safety limiter 103 to determine first upper and lower torque thresholds. Such determination is discussed in more detail in relation to FIG. 4 and can include information regarding vehicle velocity, rack position, rack velocity and torsion bar torque. For example, the sensor module can comprise one or more of a torsion bar torque sensor, a steering angle sensor, and a pinion angle sensor. Vehicle velocity is typically sensed outside the steering system (e.g., in another module) and sent to the steering system.

A torsion bar torque sensor measures the torsion bar torque. In vehicles, a torsion bar is a long spring-element with one end attached rigidly to the vehicle chassis and the other end twisted by a lever. When the vehicle driver turns the steering wheel, the torsion bar twists and this displacement is used to determine the level of torsion bar torque. A steering angle sensor can be configured to sense a steering angle of a steering wheel.

A rack position is typically calculated from the measured pinion-angle. The typically sensor element is a pinion angle-sensor, and the rack-position is calculated from the measured pinion-angle. A steering rack is part of a vehicle's steering system and allows wheels to rotate from side to side when driver turns the steering wheel. The steering rack is also sometimes called the rack and pinion assembly. The pinion gear receives the turning motion from the steering wheel and pushes the geared rack left or right.

The vehicle velocity sensor is configured to sense a velocity of the vehicle. The vehicle velocity sensor can include one or more sensors, for example, a sensor for sensing a vehicle velocity using the angular velocity of a wheel, a sensor for sensing a vehicle velocity by measuring an engine RPM (Revolution Per Minute), a sensor for sensing a vehicle velocity using the GPS (Global Positioning System), etc. While these are examples of sensors and other information that could be used to determine first upper and lower torque thresholds, other sensors and/or information could be used in addition to or in alternative to these discussed. Additionally, the vehicle velocity sensor is typically not in the steering system and is sent to the steering system from another module along with other vehicle signals, such as drive modes, ADAS-requests, etc.

FIG. 2 shows a method of controlling motor torque in a vehicle 110, which can be performed by steering system 100. Step 202 is where torque requests are received into the system from controller 102. Torque requests are received continuously into the system when a vehicle is operating.

In step 204, first upper and lower torque thresholds can be determined. This is done by a process which is discussed in further detail in relation to FIG. 4, but involves determining torque limits (thresholds) for each functional element 101a, 101b, 101c and arbitrating to determine which torque limit takes precedence at the specific time, which can be related to the specific driving mode and/or conditions. The first upper and lower torque thresholds are then set to indicate a range of torque in which the vehicle is controllable during the current driving situation and thus any torque requests within that range can be sent to the motor.

Step 206 then goes on to determine second upper and lower torque thresholds, with the second upper torque threshold being higher than the first upper torque threshold and the second lower torque threshold being lower than the first lower torque threshold. The second upper torque threshold and the second lower torque threshold define the upper and lower limits which the motor torque cannot exceed for safe operations. This step is typically performed by adding an offset to each of the first upper and lower torque thresholds. The offset could be a static number, percentage or even a function (e.g., look-up table) of vehicle speed.

The controller 102 receives the torque request and transmits the torque request to safety limiter 103, which has determined the first and second upper and lower torque thresholds. Step 207 then determines whether the torque request is between the first upper and first lower torque thresholds, within the range of allowable torque. If the answer to this is yes, the torque request is transmitted to motor 104 in step 213. Additionally, step 214 can be performed to determine if the second upper and lower torque thresholds can be reset to a previous level (with a larger range of limits for the torque requests). Step 214 determines if the second upper torque threshold and/or lower torque threshold have been previously adjusted, and identifies a number of times they have been previously adjusted. If the number of times that they have been previously adjusted is equal to or less than a count threshold, the second upper and/or lower torque thresholds can be restored to their original (pre-adjusted) values at step 216. Such a step would mean moving lines 404 and 403 of FIG. 3 back to their original levels after they extended for a time in alignment with first upper and lower thresholds 301 and 302.

If the number of times that second upper and lower torque thresholds have been previously adjusted is above a count threshold, in step 218 a warning signal is be transmitted to indicate that the vehicle should be taken in for inspection. The count threshold could be set as a static value or in some cases could be dynamic depending on driving mode, conditions, speed, etc. Such a warning can indicate that one or more functional elements 101a, 101b, 101c of the steering system is malfunctioning and/or there is another error or fault in the overall system resulting in the second upper and lower torque thresholds (limits) needing to be adjusted to narrower ranges too many times. Thus, the exceeding of the count threshold can give a user an early indication that the vehicle should be inspected to ensure safe driving before allowing for a wider interval of torque requests again.

If the torque request from step 207 is not between the first upper and first lower torque thresholds, but is either between the first and second upper torque thresholds or between the first and second lower torque thresholds, and consecutive torque requests are received in this range, the consecutive requests are summed up to find a summed-up torque value. Such a summed-up torque value is depicted in FIG. 3 as summed-up torque area 306, with line 301 depicting the first upper torque threshold, 303 as the second upper torque threshold, 302 as the first lower torque threshold and 304 as the second lower torque threshold.

Thus, summed-up torque value 306 depicts the summed up value of consecutive torque requests over time which fall between first lower torque threshold 302 and second lower torque threshold 304 (though in other examples could be the summed-up torque values which fall between the first upper torque threshold and second upper torque threshold). If this summed-up torque value exceeds a summed-up torque limit, second upper and lower torque thresholds are adjusted as depicted at line L of FIG. 3, moving the values of second upper and lower torque thresholds 303, 304 to be the same as first upper and lower torque thresholds 301, 302 (step 210). The torque request sent to the motor is then limited to the newly adjusted second upper and lower torque thresholds (step 211).

The summed-up torque limit is related to the amount of time a vehicle can safely operate outside of the range of allowable torque (within the first upper and lower torque limits 301, 302) before it becomes an indication that there may be a malfunction in a function element, component or system. Thus, the system and vehicle are able to accommodate torque requests outside of the first upper and lower torque thresholds but within the second upper and lower torque thresholds if it is only for a limited amount of time. If it is for more than the allowed amount of time, set by the summed-up torque limit, the second upper and/or lower torque threshold is lowered or raised, respectively, to adjust the limits which the motor torque (and torque requests) cannot exceed to a more narrow range. This is typically to the levels of the first upper and lower torque thresholds as shown in FIG. 3, or in some cases could be to a different range which is more narrow than the original (non-adjusted) second upper and lower torque thresholds but still outside the first upper and lower torque thresholds. If the summed-up torque value does not exceed the summed-up torque limit, the second upper and lower torque thresholds are maintained as shown in step 212 and the torque request is sent to the motor in step 215.

Thus, method 200 provides a way of monitoring torque requests and dynamically adjusting thresholds and limits in the system to ensure safe and controllable operation, consistent steering feel, and better disturbance rejection, especially when it comes to interfacing and transitioning to, from or within Advanced Driver Assistance System (ADAS) or Highly Automated Driving (HAD) functionalities. Method 200 allows for determining both a range of allowable torque for controllability in all situations (between the first upper and lower torque thresholds), as well as upper and lower limits for torque request (the second upper and lower torque thresholds) through one safety limiter, which provides for a more simple yet still reliable system. As briefly discussed in the background, in past systems, separate safety limiters were needed for each functional element of a steering system to determine and set the limits of torque requests coming from each functional element, whereas the current system and method are able to use only a single safety limiter 103 after the controller which can still handle a variety of use conditions without sacrificing steering functionality and performance. The ability to allow torque requests outside the first upper and lower thresholds (but within the second upper and lower thresholds) for limited periods of time allows for a more flexible system able to respond more dramatically in some situations where needed without compromising on safety by ensuring that such requests do not continue for too long before the second upper and/or lower torque thresholds are adjusted to only allow torque requests at known safe levels. Additionally, the method allows for dynamically restoring second upper and/or lower thresholds to previous levels when it is safe to do so (the number of times previously adjusted is below a count threshold). Thus, method 200 and system 100 allow for a single safety mechanism to provide dynamic and safe torque limitations for a large variety of vehicle operating conditions without compromising on steering functionality and performance.

FIG. 4 depicts a more detailed method of determining the first upper torque threshold and first lower torque threshold. Specifically, method 400 includes determining first, second and third sets of thresholds in steps 402, 404 and 406. These can be specifically related to the thresholds for functional elements 101a, 101b and 101c of the steering reference module 101 (as previously described in relation to FIG. 1A) which are currently detected as being in operation. The basis of determining thresholds is different depending on the specific functional elements in operation, but a few examples will be described below.

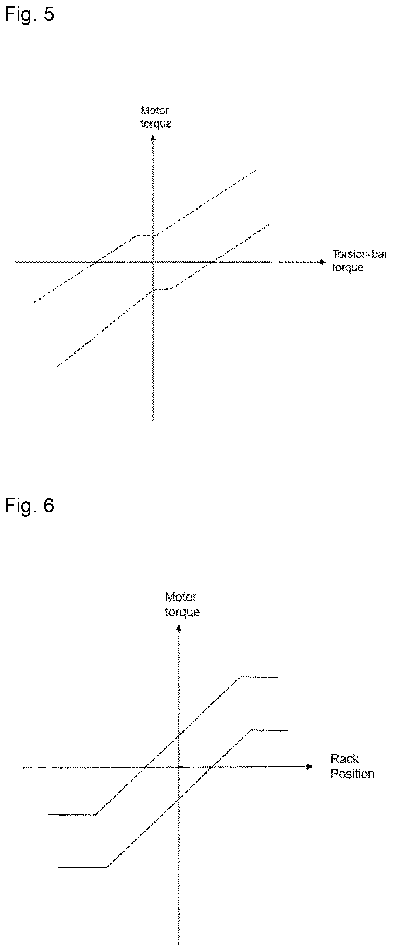

The firsts set of thresholds (box 402) could be upper and lower thresholds for the driver limits, with a graph of such thresholds depicted in FIG. 5. For example, the driver limiter should have upper and lower thresholds related to the acceptable torque limits for manual driving. Driver limits typically have a static component based on torsion bar torque that is tuned for a number of vehicle speeds as well as a dynamic component. Thus the first set of thresholds can be the upper and lower torque thresholds of the driver limiter based on sensor information related to the vehicle speed, rack speed and torsion bar torque.

The second set of thresholds (box 404) could relate to the ADAS limits as depicted in FIG. 6, setting an upper and lower threshold for torque requests according to the ADAS. ADAS limits can, for example, be based on alignment torque at a given rack position and vehicle speed, and the limits are set to restrict max lateral acceleration and jerk.

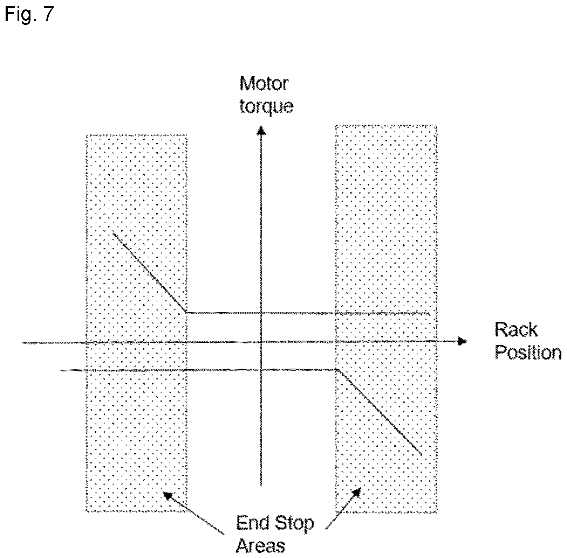

The third set of thresholds can be related to the end stop limits (box 306) as depicted in FIG. 7, setting upper and lower thresholds with expanded limits at high travel speeds to allow active end stop to counter-steer the driver. Thus, the third set of thresholds related to end stop limits can be based on sensor information related to rack position and vehicle speed.

These three sets of thresholds can then be arbitrated (box 408) to determine which threshold takes precedence depending on current vehicle operating conditions. For example, in a vehicle operating with an ADAS feature that supports the driver to steer the vehicle, if a driver only rests his hands on the steering wheel during this operating condition, the ADAS limits will take precedence and allow a torque request originating from the ADAS feature to steer the vehicle. In contrast, when a driver counter-steers the ADAS feature, the driver limits will take precedence. In a parking scenario, when a driver reaches the maximum steering wheel angle, end stop limits will append to the other limits and allow the end-stop feature to counter-act the drivers effort to steer more than the system allows.

Thus, after the arbitrating, the first upper and lower torque thresholds are determined and set in step 410 thereby indicating the range of allowable torque requests which can be sent to the motor. Such a range is associated with the range of motor torque in which the vehicle is controllable in the current operating conditions. Thus, method 400 can be used to determine first upper and lower thresholds for torque requests which are responsive and dynamic to which specific steering functions are in operation and the particular needs and limits of each, arbitrating such that the thresholds can be set to ensure safe and high performance of the steering system. Such limits are continually changing

Those skilled in the art will appreciate that the methods, systems and components described herein may comprise, in whole or in part, a combination of analog and digital circuits and/or one or more appropriately programmed processors (e.g., one or more microprocessors including central processing units (CPU)) and associated memory, which may include stored operating system software, firmware and/or application software executable by the processor(s) for controlling operation thereof and/or for performing the particular algorithms represented by the various functions and/or operations described herein, including interaction between and/or cooperation with each other as well as transmitters and receivers. One or more of such processors, as well as other digital hardware, may be included in a single ASIC (Application-Specific Integrated Circuitry), or several processors and various digital hardware may be distributed among several separate components, whether individually packaged or assembled into a SoC (System-on-a-Chip).

Furthermore, the systems, methods and components described, and/or any other arrangement, unit, system, device or module described herein may for instance be implemented in one or several arbitrary nodes comprised in the vehicle and/or one or more separate devices or systems. In that regard, such a node may comprise a control unit or any suitable electronic device, which may be a main or central node. It should also be noted that the these may further comprise or be arranged or configured to cooperate with any type of storage device or storage arrangement known in the art, which may for example be used for storing input or output data associated with the functions and/or operations described herein. The systems, components and methods described herein may further comprise any computer hardware and software and/or electrical hardware known in the art configured to enable communication therebetween.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A method of controlling motor torque in a vehicle, the method comprising:
- receiving torque requests;
- determining a first upper torque threshold and a first lower torque threshold based on vehicle sensor information, the first upper torque threshold and the first lower torque threshold indicative of a range of allowable torque;
- determining a second upper torque threshold and a second lower torque threshold, wherein the second upper torque threshold is higher than the first upper torque threshold and the second lower torque threshold is lower than the first lower torque threshold, **characterised in that** the second upper torque threshold and the second lower torque threshold set upper and lower limits which the motor torque cannot exceed;
- if consecutive torque requests are received that are between the first upper torque threshold and the second upper torque threshold or between the first lower torque threshold and the second lower torque threshold, summing up over time the consecutive torque requests between the first upper torque threshold and the second upper torque threshold or between the first lower torque threshold and the second lower torque threshold to find a summed-up torque value; and
- if the summed-up torque value exceeds a summed-up torque limit, adjusting the second upper torque threshold and/or the second lower torque threshold.

2. The method of claim 1, wherein the step of adjusting the second upper torque threshold and/or the second lower torque threshold if the summed-up torque value exceeds a summed-up torque limit comprises lowering the second upper torque threshold and/or raising the second lower torque threshold to narrow the upper and/or lower limits which the motor torque cannot exceed.

3. The method of any of the preceding claims, wherein the step of adjusting the second upper torque threshold and/or the second lower torque threshold if the summed-up torque value exceeds a summed-up torque limit comprises lowering the second upper torque threshold to be the same as the first upper torque threshold and/or raising the second lower torque threshold to be the same as the first lower torque threshold.

4. The method of any of the preceding claims, wherein if the summed-up torque value is equal to or below the summed-up torque limit, the second upper torque threshold and the second lower torque threshold are maintained.

5. The method of claim 1, further comprising:
- if a torque request is between the first upper torque threshold and the first lower torque threshold, determining whether the second upper torque threshold and/or lower torque threshold have been previously adjusted;
- if the second upper torque threshold and/or lower torque threshold have been previously adjusted, identifying a number of times the second upper torque threshold and/or lower torque threshold have been previously adjusted; and
- if the number of times the second upper torque threshold and/or lower torque threshold have been previously adjusted is equal to or lower than a count threshold, restoring the second upper torque threshold and/or lower torque threshold to the second upper and/or lower torque thresholds before adjusting.

6. The method of claim 5, further comprising:
- if the number of times the second upper torque threshold and/or second lower torque threshold have been previously adjusted is greater than the count threshold, transmitting a warning signal.

7. The method of any of the preceding claims, wherein the determining the second upper torque threshold and the second lower torque threshold comprises adding an offset value to the first upper torque threshold and to the first lower torque threshold, respectively.

8. The method of any of the preceding claims, wherein the vehicle sensor information used for determining the first upper torque threshold and the first lower torque threshold comprises at least one of a vehicle velocity, a rack position, a rack velocity and a torsion bar torque.

9. The method of claim 1, wherein determining the first upper torque threshold and the first lower torque threshold based on vehicle sensor information comprises:
detecting current steering function elements in operation;
determining thresholds for each of the steering function elements in operation; and
arbitrating between the thresholds based on which motor torque limits take precedence.

10. The method of claim 9, wherein the current steering wheel functions comprise one or more of: driver limiter, ADAS limiter, and end stop limiter.

11. The method of claim 1, wherein the method is performed in a closed-loop steering system.

12. A safety limiter configured to perform the method of any of claims 1-10.

13. A closed-loop steering system comprising:
- a low level controller configured to provide torque requests;
- a safety limiter configured to receive the torque requests and perform the method according to any claims 1-10; and
- a motor configured to receive torque requests from the safety limiter.

14. A vehicle comprising the closed-loop steering system according to claim 13.

15. The vehicle of claim 14, and further comprising one or more of: a torsion bar torque sensor, a steering angle sensor, a pinion angle sensor, and a vehicle velocity sensor configured to send information to the closed-loop steering system.

## Patentansprüche

1. Verfahren zum Steuern eines Motordrehmoments in einem Fahrzeug, wobei das Verfahren Folgendes umfasst:
- Empfangen von Drehmomentanforderungen;
- Bestimmen einer ersten oberen Drehmomentschwelle und einer ersten unteren Drehmomentschwelle basierend auf Fahrzeugsensorinformationen, wobei die erste obere Drehmomentschwelle und die erste untere Drehmomentschwelle einen Bereich eines zulässigen Drehmoments angeben;
- Bestimmen einer zweiten oberen Drehmomentschwelle und einer zweiten unteren Drehmomentschwelle, wobei die zweite obere Drehmomentschwelle höher als die erste obere Drehmomentschwelle ist und die zweite untere Drehmomentschwelle niedriger als die erste untere Drehmomentschwelle ist, **dadurch gekennzeichnet, dass** die zweite obere Drehmomentschwelle und die zweite untere Drehmomentschwelle Ober- und Untergrenzen festlegen, die das Motordrehmoment nicht überschreiten darf;
- wenn aufeinanderfolgende Drehmomentanforderungen empfangen werden, die zwischen der ersten oberen Drehmomentschwelle und der zweiten oberen Drehmomentschwelle oder zwischen der ersten unteren Drehmomentschwelle und der zweiten unteren Drehmomentschwelle liegen, Summieren der aufeinanderfolgenden Drehmomentanforderungen zwischen der ersten oberen Drehmomentschwelle und der zweiten oberen Drehmomentschwelle oder zwischen der ersten unteren Drehmomentschwelle und der zweiten unteren Drehmomentschwelle im Zeitlauf, um einen summierten Drehmomentwert zu ermitteln; und
- wenn der summierte Drehmomentwert eine Grenze für das summierte Drehmoment überschreitet, Anpassen der zweiten oberen Drehmomentschwelle und/oder der zweiten unteren Drehmomentschwelle.

2. Verfahren nach Anspruch 1, wobei der Schritt zum Anpassen der zweiten oberen Drehmomentschwelle und/oder der zweiten unteren Drehmomentschwelle, wenn der summierte Drehmomentwert eine Grenze für das summierte Drehmoment überschreitet, Absenken der zweiten oberen Drehmomentschwelle und/oder Anheben der zweiten unteren Drehmomentschwelle umfasst, um die Ober- und/oder Untergrenzen, die das Motordrehmoment nicht überschreiten darf, einzuengen.

3. Verfahren nach einem der vorhergehenden Ansprüche, wobei der Schritt zum Anpassen der zweiten oberen Drehmomentschwelle und/oder der zweiten unteren Drehmomentschwelle, wenn der summierte Drehmomentwert eine Grenze für das summierte Drehmoment überschreitet, Absenken der zweiten oberen Drehmomentschwelle auf den gleichen Wert wie die erste obere Drehmomentschwelle und/oder Anheben der zweiten unteren Drehmomentschwelle auf den gleichen Wert wie die erste untere Drehmomentschwelle umfasst.

4. Verfahren nach einem der vorhergehenden Ansprüche, wobei, wenn der summierte Drehmomentwert gleich oder unter der Grenze für das summierte Drehmoment ist, die zweite obere Drehmomentschwelle und die zweite untere Drehmomentschwelle beibehalten werden.

5. Verfahren nach Anspruch 1, das ferner Folgendes umfasst:
- wenn eine Drehmomentanforderung zwischen der ersten oberen Drehmomentschwelle und der ersten unteren Drehmomentschwelle liegt, Bestimmen, ob die zweite obere Drehmomentschwelle und/oder untere Drehmomentschwelle zuvor angepasst wurden;
- wenn die zweite obere Drehmomentschwelle und/oder untere Drehmomentschwelle zuvor angepasst wurden, Identifizieren einer Anzahl von Malen, die die zweite obere Drehmomentschwelle und/oder untere Drehmomentschwelle zuvor angepasst wurden; und
- wenn die Anzahl von Malen, die die zweite obere Drehmomentschwelle und/oder untere Drehmomentschwelle zuvor angepasst wurden, gleich oder kleiner als eine Anzahlschwelle ist, Zurücksetzen der zweiten oberen Drehmomentschwelle und/oder unteren Drehmomentschwelle auf die zweite obere und/oder untere Drehmomentschwelle vor dem Anpassen.

6. Verfahren nach Anspruch 5, das ferner Folgendes umfasst:
- wenn die Anzahl von Malen, die die zweite obere Drehmomentschwelle und/oder die zweite untere Drehmomentschwelle zuvor angepasst wurden, größer als die Anzahlschwelle ist, Senden eines Warnsignals.

7. Verfahren nach einem der vorhergehenden Ansprüche, wobei das Bestimmen der zweiten oberen Drehmomentschwelle und der zweiten unteren Drehmomentschwelle Addieren eines Versatzwerts zu der ersten oberen Drehmomentschwelle bzw. zu der ersten unteren Drehmomentschwelle umfasst.

8. Verfahren nach einem der vorhergehenden Ansprüche, wobei die Fahrzeugsensorinformationen, die zum Bestimmen der ersten oberen Drehmomentschwelle und der ersten unteren Drehmomentschwelle verwendet werden, mindestens eines einer Fahrzeuggeschwindigkeit, einer Zahnstangenposition, einer Zahnstangengeschwindigkeit und eines Drehstabdrehmoments umfassen.

9. Verfahren nach Anspruch 1, wobei das Bestimmen der ersten oberen Drehmomentschwelle und der ersten unteren Drehmomentschwelle basierend auf Fahrzeugsensorinformationen Folgendes umfasst:
Detektieren aktueller Lenkfunktionselemente im Betrieb;
Bestimmen von Schwellen für jedes der Lenkfunktionselemente im Betrieb; und
Arbitrieren zwischen den Schwellen basierend darauf, welche Motordrehmomentgrenzen Vorrang haben.

10. Verfahren nach Anspruch 9, wobei die aktuellen Lenkradfunktionen eines oder mehrere von Folgendem umfassen: einen Fahrerbegrenzer, einen ADAS-Begrenzer und einen Endanschlagbegrenzer.

11. Verfahren nach Anspruch 1, wobei das Verfahren in einem Lenksystem mit geschlossenem Regelkreis durchgeführt wird.

12. Sicherheitsbegrenzer, der dazu ausgelegt ist, das Verfahren nach einem der Ansprüche 1-10 durchzuführen.

13. Lenksystem mit geschlossenem Regelkreis, das Folgendes umfasst:
- eine Low-Level-Steuerung, die dazu ausgelegt ist, Drehmomentanforderungen bereitzustellen;
- einen Sicherheitsbegrenzer, der dazu ausgelegt ist, die Drehmomentanforderungen zu empfangen und das Verfahren nach einem der Ansprüche 1-10 durchzuführen; und
- einen Motor, der dazu ausgelegt ist, Drehmomentanforderungen von dem Sicherheitsbegrenzer zu empfangen.

14. Fahrzeug, das das Lenksystem mit geschlossenem Regelkreis nach Anspruch 13 umfasst.

15. Fahrzeug nach Anspruch 14, und ferner umfassend eines oder mehrere von Folgendem: einen Drehstabdrehmomentsensor, einen Lenkwinkelsensor, einen Ritzelwinkelsensor und einen Fahrzeuggeschwindigkeitssensor, die dazu ausgelegt sind, Informationen an das Lenksystem mit geschlossenem Regelkreis zu senden.

## Revendications

1. Procédé de commande de couple de moteur dans un véhicule, le procédé comprenant les faits suivants :
- recevoir des demandes de couple ;
- déterminer un premier seuil de couple supérieur et un premier seuil de couple inférieur sur la base d'informations de capteur de véhicule, le premier seuil de couple supérieur et le premier seuil de couple inférieur étant indicatifs d'une plage de couple admissible ;
- déterminer un second seuil de couple supérieur et un second seuil de couple inférieur, dans lequel le second seuil de couple supérieur est plus élevé que le premier seuil de couple supérieur et le second seuil de couple inférieur est plus bas que le premier seuil de couple inférieur, **caractérisé en ce que** le second seuil de couple supérieur et le second seuil de couple inférieur établissent des limites supérieure et inférieure que le couple de moteur ne peut pas dépasser ;
- si des demandes de couple consécutives sont reçues qui sont entre le premier seuil de couple supérieur et le second seuil de couple supérieur ou entre le premier seuil de couple inférieur et le second seuil de couple inférieur, sommer au fil du temps les demandes de couple consécutives entre le premier seuil de couple supérieur et le second seuil de couple supérieur ou entre le premier seuil de couple inférieur et le second seuil de couple inférieur pour trouver une valeur de couple sommée ; et
- si la valeur de couple sommée dépasse une limite de couple sommée, ajuster le second seuil de couple supérieur et/ou le second seuil de couple inférieur.

2. Procédé de la revendication 1, dans lequel l'étape consistant à ajuster le second seuil de couple supérieur et/ou le second seuil de couple inférieur si la valeur de couple sommée dépasse une limite de couple sommée comprend le fait abaisser le second seuil de couple supérieur et/ou d'élever le second seuil de couple inférieur to réduire les limites supérieure et/ou inférieure que le couple de moteur ne peut pas dépasser.

3. Procédé de quelconques des revendications précédentes, dans lequel l'étape consistant à ajuster le second seuil de couple supérieur et/ou le second seuil de couple inférieur si la valeur de couple sommée dépasse une limite de couple sommée comprend le fait d'abaisser le second seuil de couple supérieur pour qu'il soit le même que le premier seuil de couple supérieur et/ou d'élever le second seuil de couple inférieur pour qu'il soit le même que le premier seuil de couple inférieur.

4. Procédé de quelconques des revendications précédentes, dans lequel si la valeur de couple sommée est égale à la limite de couple sommée ou en dessous de celle-ci, le second seuil de couple supérieur et le second seuil de couple inférieur sont maintenus.

5. Procédé de la revendication 1, comprenant en outre les faits suivants :
- si une demande de couple est entre le premier seuil de couple supérieur et le premier seuil de couple inférieur, déterminer si le second seuil de couple supérieur et/ou seuil de couple inférieur ont été ajustés auparavant ;
- si le second seuil de couple supérieur et/ou seuil de couple inférieur ont été ajustés auparavant, identifier un nombre de fois que le second seuil de couple supérieur et/ou seuil de couple inférieur ont été ajustés auparavant ; et
- si le nombre de fois que le second seuil de couple supérieur et/ou seuil de couple inférieur ont été ajustés auparavant est égal à un seuil de compte ou plus bas que celui-ci, rétablir le second seuil de couple supérieur et/ou seuil de couple inférieur aux seconds seuils de couple supérieur et/ou inférieur avant d'ajuster.

6. Procédé de la revendication 5, comprenant en outre les faits suivants :
- si le nombre de fois que le second seuil de couple supérieur et/ou second seuil de couple inférieur ont été ajustés auparavant est plus grand que le seuil de compte, transmettre un signal d'avertissement.

7. Procédé de quelconques des revendications précédentes, dans lequel le fait de déterminer le second seuil de couple supérieur et le second seuil de couple inférieur comprend le fait d'additionner une valeur de décalage au premier seuil de couple supérieur et au premier seuil de couple inférieur, respectivement.

8. Procédé de quelconques des revendications précédentes, dans lequel les informations de capteur de véhicule utilisées pour déterminer le premier seuil de couple supérieur et le premier seuil de couple inférieur comprennent au moins un paramètre parmi une vitesse de véhicule, une position de crémaillère, une vitesse de crémaillère, et un couple de barre de torsion.

9. Procédé de la revendication 1, dans lequel le fait de déterminer le premier seuil de couple supérieur et le premier seuil de couple inférieur sur la base d'informations de capteur de véhicule comprend les faits suivants :
détecter des éléments de fonctions de direction actuelles en fonctionnement ;
déterminer des seuils pour chacun des éléments de fonctions de direction en fonctionnement ; et
arbitrer entre les seuils sur la base des limites de couple de moteur qui ont la priorité.

10. Procédé de la revendication 9, dans lequel les fonctions de volant de direction actuelles comprennent un ou plusieurs dispositifs parmi : limiteur de conduite, limiteur ADAS, et limiteur de butée d'extrémité.

11. Procédé de la revendication 1, dans lequel le procédé est réalisé dans un système de direction en boucle fermée.

12. Limiteur de sécurité configuré pour réaliser le procédé de quelconques des revendications 1 à 10.

13. Système de direction en boucle fermée, comprenant :
- un contrôleur de niveau bas configuré pour fournir des demandes de couple ;
- un limiteur de sécurité configuré pour recevoir les demandes de couple et réaliser le procédé selon de quelconques revendications 1 à 10 ; et
- un moteur configuré pour recevoir des demandes de couple en provenance du limiteur de sécurité.

14. Véhicule, comprenant le système de direction en boucle fermée selon la revendication 13.

15. Véhicule de la revendication 14, et comprenant en outre un ou plusieurs dispositifs parmi : un capteur de couple de barre de torsion, un capteur d'angle de braquage, un capteur d'angle de pignon, et un capteur de vitesse de véhicule, configuré pour envoyer des informations au système de direction en boucle fermée.
